(19) Europäisches Patentamt
European Patent Office
Office européen des brevets

(11) Publication number: **0 280 981 B1**

(12) **EUROPEAN PATENT SPECIFICATION**

(45) Date of publication of patent specification: **22.07.92**

(51) Int. Cl.5: **C08G 18/48**, C08G 18/76, C09D 175/00

(21) Application number: **88102540.7**

(22) Date of filing: **22.02.88**

The file contains technical information submitted after the application was filed and not included in this specification

(54) **Abrasion-, heat-, and corrosion-resistant polyurethane system.**

(30) Priority: **02.03.87 US 20914**
**26.05.87 US 53930**
**25.09.87 US 101215**

(43) Date of publication of application:
**07.09.88 Bulletin 88/36**

(45) Publication of the grant of the patent:
**22.07.92 Bulletin 92/30**

(84) Designated Contracting States:
**BE DE FR GB IT NL SE**

(56) References cited:
**EP-A- 0 132 057**
**GB-A- 1 190 446**
**US-A- 4 643 794**

(73) Proprietor: **W.R. Grace & Co.-Conn. (a Connecticut corp.)**
**Grace Plaza 1114 Avenue of the Americas**
**New York New York 10036(US)**

(72) Inventor: **Vu, Cung**
**18805 Still Meadows Ct.**
**Gaithersburg, MD 20879(US)**
Inventor: **Hartwig, Richard Christian**
**12214 Valerie Lane**
**Laurel, MD 20708(US)**

(74) Representative: **UEXKÜLL & STOLBERG Patentanwälte**
**Beselerstrasse 4**
**W-2000 Hamburg 52(DE)**

**EP 0 280 981 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the field of polyurethane resins and coatings made therefrom. More particularly, the invention is directed to making a novel polyurethane resin by reacting together two components, viz., a specific polyol mixture with a specific polyisocyanate prepolymer in the presence of a catalyst system. The resin has special utility as an automotive underbody

BACKGROUND OF THE INVENTION

Two-component mixes for the preparation of polyurethane resins are well known. As a matter of fact, in an elemental sense, the first polyurethane resins were made by mixing two components, which is to say, by reacting together a polyol as one component and a diisocyanate as the other. This concept has become greatly refined and elaborated on during the subsequent growth of the polyurethane resin industry, and various two-component mixes have been reported, where one component comprises a prepolymer mix of polyols and the other one or more diisocyanates, one or more of which may be in prepolymeric form. The individual components may be capped; that is, the polyols may be wholly or partially terminated by isocyanate groups, and the isocyanate reactant (in the other component) may be wholly or partially terminated by a polyol. Two-component mixes are described, for example, in U.S. Patents 4,410,597 and 4,101,473 (these same two patents disclose our preferred catalyst combination of dibutyl tin dilaurate -"DBTDL"- and triethylene diamine -"DABCO"-, as used in our Example 1; see below). U.S. Patent 4,410,597 further discloses polyurethane coatings made with certain isocyanates and acrylic esters. Resistance to acids and warm water is claimed. Polyol mixtures are known, e.g., polyethylene glycol and trimethylolpropane, in U.S. Patent 4,137,200, Example 1. That patent also discloses solvent-free two-component mixes. Such mixes are also mentioned in P U Paints and Coatings, H. Koch et al, Hanser Publishers, p. 525 (1985), which reference recommends two-component spray equipment in view of the resins' short pot life and high viscosity. Such equipment is available commercially and is useful in applying the resin of the present invention.

Polyurethane coatings are known for use in the auto industry; see UK Patent Application 2,147,910A, published May 22, 1985; and U.S. Patents 4,554,188, 4,400,497 and 4,525,570.

TABLE I provides a summary check list of additional relevant U.S. patents, with an indication of their relevance. Some of these patents are discussed at more length below.

U.S. 4,225,696 - Colpitts et al - makes an isocyanate-terminated prepolymer by reacting an isocyanate with a polyether diol: 1/40; 3/15. (Indicia are to column/line in the patent.) The isocyanate can be MDI (diphenylmethane 4,4′-diisocyanate) (2/68), the diol can be poly(oxypropylene) glycol (2/45). The prepolymer is cured with a diol, polyol or a mix (1/43). The polyol may be glycerine (2/53) and/or poly-(oxypropylene) triol (2/55). Formulation IV (5/25) has 3 polyols plus MDI. (The MDI is actually a mix with unidentified "adducts".) DBTDL catalyst is used (4/29). (Resistance to thermal distortion is mentioned, but the reference is merely to body heat, i.e., a dental plate.)

In Colpitts' formulation (his Table, col. 5) the ratio of polyols/isocyanate, i.e., A/B, is always about 1.

U.S. 4,376,834 - Goldwasser et al - makes a prepolymer with MDI (5/18) and a polyether polyol (6/33), with MW greater than 500 (6/15) and a functionality 2-4 (6/48). The prepolymer is reacted with a 3-polyol mix comprising a triol and a diol (6/49) and glycerol (8/30). See, e.g., Goldwasser's TABLE III. A/B in Example 1 is 0.62, in Examples 2 and 3, 0.54, and Example 4, 0.65. The other examples appear to give about the same or lower ratios. Examples 9 describes humidity tests on a coating made with MDI, 1,4-butanediol, neopantyl glycol, and a polytetramethylene glycol. Substantial gains in weight and loss in Izod impact were reported.

Polyol mixes are not new, though our particular three in their particular proportions do indeed appear novel as Component A.

In addition to U.S. 4,225,696 to Colpitts and U.S. 4,376,834 to Goldwasser, other patents disclose 3-polyol mixes, e.g.:

U.S. 3,993,576 - Examples 15 and 16 show glycerine plus an adduct of glycerine with propylene oxide end-capped with ethylene oxide plus a solubilizer for the polyols, i.e., an adduct of an alkylene glycol with an alkylene oxide. In separate statements, the high-molecular weight polyols have hydroxyl equivalent weights of 650-3,000 and 2-4 hydroxyl groups per molecule. Mixtures are included (1/30-36), including glycerine (1/43).

U.S. 4,131,604 uses a 3-polyol mix, but one of the polyols is required to be polytetramethylene ether glycol, which we do not have. Also, the diisocyanate must be aliphatic.

Thermal Properties

Patents indicating polyurethanes (P U's) with some sort of thermal properties include:

| | |
|---|---|
| 3,310,533 - | P U m.p. is 182-190 ° C; |
| 3,748,315 - | coatings cured at 150 ° -240 ° C (3/29); |
| 3,933,759 - | "rapid cures at 170-200 ° C" (8/66), Example 1, 195 ° C for 5 minutes; |
| 3,939,222 - | Example 4, coated steel plate hardened at 210 ° C for 2 minutes was wear-resistant, had good adhesion; |
| 3,941,855 - | tempering cast P U at 140-180 ° C; |
| 4,081,429 - | stable at 93 ° C; |
| 4,124,573 - | TABLE II shows stability at over 185 ° C; |
| 4,225,696 - | refers to thermal stability but means merely body heat; |
| 4,376,834 - | cures at 250 ° C (4/36); |
| 4,404,258 - | P U coating on PVC stable at 100 ° for 5 days; |
| 4,436,862 - | adds clay for "thermal stability", but this means stable storage at 14 ° C for over 1 month. |

Other References:

| | |
|---|---|
| 3,748,315 - | also mentions "weatherometer" tests. The isocyanate is MDI plus an isocyanurate plus a polyester. |
| 4,520,042 and Japanese PN 137,143 - | disclose our preferred catalyst system. |
| 4,049,636, 4,066,397, and 4,689,385 - | disclose compositions similar to Applicants'. |

TABLE I

Check List of Certain Prior U.S. Patents

| Patent No. | MDI-Prepol (1) | Reacts Prepol. with Polyols (2) | Polyol Mix (3) | DBTDL Cat. (4) | Tri-Ethylene Diamine Cat. | Mentions "Thermal" |
|---|---|---|---|---|---|---|
| 3,310,533 | | | | | | x |
| 3,654,106 | x | | | | | |
| 3,748,315 | | | | | | x |
| 3,915,937 | x | | | | | |
| 3,933,759 | x | | | x | | x |
| 3,939,222 | x | | | | | x |
| 3,941,855 | | | | | | x |
| 3,993,576 | | | x | | | |
| 4,081,429 | | | | | | x |
| 4,082,703 | x | | | x | | |
| 4,124,573 | x | | | x | x | x |
| 4,131,604 | | | x | | | |
| 4,225,696 | x | x | x | | | |
| 4,376,834 | x | x | x | x | | x |
| 4,404,258 | x | | | | | x |
| 4,436,862 | | | | | | x |
| 4,532,316 | x | | | | | |
| 4,551,498 | x | | | x | | |
| 4,604,445 | x | | | | | |

(1) makes a prepolymer with MDI and a poly(oxypropylene) glycol;

(2) reacts that prepolymer with a polyether-diol-triol glycerine mix;

(3) polyol mix in some ways resembles our Component A;

(4) dibutyl tin dilaurate catalyst.

## BRIEF DESCRIPTION OF THE INVENTION

Our novel polyurethane resin is made by mixing together two components, herein Components A and B.

Component A consists essentially of

(i) a major amount of a polyether diol based on propylene oxide and containing only secondary hydroxyl groups (herein PPG). This material has a molecular weight of 400 to 4000. It is available commercially from various sources, e.g., as NIAX (Trademark) PPG-1025 from Union Carbide Corp.;

(ii) a polypropylene oxide-based polyether triol containing only secondary hydroxyl groups, molecular weight of 500 to 3000 herein (PPT), available commercially from various sources, e.g., as NIAX (Trademark) LG-168 from Union Carbide Corp., and preferably less than the amount of PPG;

(iii) a relatively small amount of glycerol; and

(iv) a polymerization/crosslinking catalyst system.

Component B consists essentially of diphenylmethane 4,4'-diisocyanate (MDI) plus a polyisocyanate prepolymer made by reacting together MDI with a poly(oxypropylene) glycol, as more particularly hereinafter described.

A and B are mixed, then immediately applied as a coating to the intended substrate. The coating is tack-free in minutes and (when applied to steel) cures rapidly to a film with excellent adhesion, abrasion resistance and heat stability.

## DETAILED DESCRIPTION OF THE INVENTION

The two components, A and B, will first be further described.

### Component A

Component A is a novel homogeneous liquid mixture of three polyols. These three polyols are quite specific as to structure, molecular weight and relative proportions. Numerous trials have shown that minor variations in any of these respects will produce inferior coatings. Each of the three polyols is well known and has been used in making polyurethane resins. The combination of the three in accordance with this invention, however, is believed unique and novel.

As mentioned, the major polyol component is PPG, a polyether diol based on propylene oxide and containing only secondary hydroxyl groups. The average molecular weight can vary in the range 400 to 4,000 and is preferably about 1,000. This polyol is available commercially from various sources, e.g., as PPG-1025 from Union Carbide Corp.

Also, as mentioned, the second polyol of Component A is PPT, a polypropylene-oxide based polyether triol containing only secondary hydroxyl groups with an average M.W. in the range of 500 to 3,000, and preferably 1,000. This polyol is available commercially from various sources, e.g., as NIAX LG-168 from Union Carbide Corp.

Both the two polyols aforesaid can be made by reaction of propylene oxide with the appropriate alcohol, using procedures well known in the art.

The third polyol is glycerol.

A two-component catalyst is used as below described. The two catalyst components are known in the polyurethane art for use individually or together.

To prepare Component A, the three polyols and the two catalysts are simply mixed together in a pot.

### Component B

The polyisocyanate prepolymer component of Component B is made in the known way by reacting together diphenylmethane 4,4'-diisocyanate (MDI) with a poly(oxypropylene) glycol of the formula:

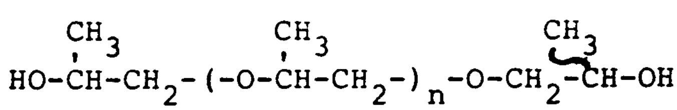

The value of n lies between 0 and 3, approximately indicating that the material is a mixture, probably with small amounts of higher and lower molecular weight polymers of the same genus. In the main reaction the MDI end-caps both ends of the poly(oxypropylene) glycol. The prepolymer thus formed may also contain small amounts of other products of the reaction, containing isocyanate and/or hydroxyl groups. The prepolymer is typically K-O-$(CH_2CH[CH_3]O)_m$-K, where K is

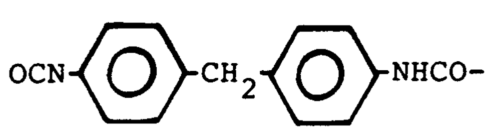

and m is 2-5. In general, Component B may be described as an MDI/polyisocyanate material comprising

45-50 weight % MDI with the balance being the described prepolymer, i.e., with some prepolymer molecules being relatively small and others larger (depending generally on the amount of capped polyoxypropylene), but with the averages being substantially as above enumerated.

Whereas MDI is a solid, and is very difficult to handle in spray apparatus, the above described MDI/polyisocyanate prepolymer is a homogeneous liquid and is readily sprayed. In the interests of brevity, this "B" mixture (or solution) is herein from time to time referred to as polyisocyanate prepolymer, MDI/Prepolymer, or simply as Component B. It is available from various sources, e.g., as Mondur XP-744 from Mobay Corporation.

## The Catalyst

The preferred catalyst is equal weights of dibutyl tin dilaurate (DBTDL) with triethylenediamine (DABCO). However, substantially any of the conventional polyurethane catalysts (and combinations) can be used.

These catalysts include:

Tertiary amines:
Triethylene diamine
N-methyl morpholine
N-ethyl morpholine
Diethyl ethanolamine
N-coco morpholine
1-methyl-4-dimethylamino ethyl piperazine
3-methoxy-N-dimethyl propyl amine
N-dimethyl-N'-methyl isopropyl propylene diamine
N,N-diethyl-3-diethyl amino propylamine
N,N-dimethyl benzyl amine
Dicyclohexylmethylamine
2,4,6-tris dimethylaminomethylphenol
N,N-dimethyl cyclohexylamine
Triethylamine
Tri-n-butylamine
1,8-diaza-bichloro[5,4,0]-undecene-7
N-methyl diethanolamine
N,N-dimethyl ethanolamine
N,N-diethyl cyclohexylamine
N,N,N'N'-tetramethyl-ethylene diamine
1,4-diaza-bicyclo-[2,2,2]-octane
N-methyl-N'-dimethylaminoethyl-piperazine
Bis-(N,N-diethylaminoethyl)-adipate
N,N-diethylbenzylamine
Pentamethyldiethylene triamine
N,N,N',N'-tetramethyl-1,3-butanediamine
1,2-dimethylimidazole
2-methylimidazole

Tin compounds:
Stannous chloride
Dibutyl tin di-2-ethyl hexoate
Stannous octoate
Dibutyl tin dilaurate
Trimethyl tin hydroxide
Dimethyl tin dichloride
Dibutyl tin diacetate
Dibutyl tin oxide
Tributyl tin acetate
Tetramethyl tin
Dimethyl dioctyl tin
Tin ethyl hexoate
Tin laurate

Dibutyl tin maleate
Dioctyl tin diacetate
Other metal organics:
Zinc octoate
Phenyl mercuric propionate
Lead octoate
Lead naphthenate
Copper naphthenate

As to the amount of catalysts(s), the preferred amount of tertiary amine catalyst is 0.01 to 3%, based on the total weight of polyols plus polyisocyanate. When using a tin compound or other metal-containing catalyst, an equal amount is suitable. Mixtures of tertiary amines and organo-metallics are particularly suitable as catalysts for this invention.

Mixing Components A and B - Application to Substrate

For small batches, A and B can be mixed in an open container at room temperature. Reaction occurs very quickly, forming the desired polyurethane resin, which can then be spread on a substrate, using paint brush, roller or like applicator. For production work (and the resin is designed for this) a conventional two-liquid air spray gun gives best results.

Application is suitably made at room temperature. The resin can be applied at higher temperatures, if desired, e.g., 26-38 °C. The coated article is tack-free within minutes and cures at room temperature without being heated. However, it is not harmed by subsequent conventional baking steps that may occur in an auto assembly line.

For our tests, the mix of Component A/Component B was coated on 10 cm x 30.5 cm steel panels that had been electrocoated with a conventional primer composition (an "E" coat), e.g., one commercially available from PPG Industries under the tradenames "3150 or "3150A". The invention coatings were fully cured at room temperature prior to testing.

Additives

Various conventional materials which are inert to the formation of the polyurethane resin from the two Components A and B can be added, e.g., thixotropic agents, anti-oxidants, antiblistering agents, reinforcing agents (fibers, platelets, crosslinkers, latexes), thickeners, plasticizers, UV stabilizers, powdered pigments, fumed silica, barytes, carbon black, titanium dioxide and the like; pigment dispersants; corrosion inhibitors; extenders and so on. These materials can be added to A, to B or the mix of A and B, in amounts ranging from 0.01 to 25% by weight of the total mix.

The Substrate

Although our novel polyurethane resin is designed primarily for the automotive industry, as an undercoating for steel frames, rocker panels, wheel wells, etc., the resin is also a useful coating for nonferrous articles (Al, Cu, Mg), wood, fabrics, concrete, plastics, rubber, glass, ceramics, fiber, paper and the like. The resin of the invention is also useful as an undercoating for rail equipment (locomotives, coaches, freight cars, street cars, subway cars), buses, ships and farm equipment. It is particularly useful in coating substrates exposed to salt and marine environments. Such substrates include steel structures for highways and bridges exposed to road salt as well as interior and exterior steel surfaces on ships and other structures on or near oceans or inland salt lakes. It can be used as a primer, an intermediate coating or as a final coating. It is paintable; i.e., after curing, it can be painted with conventional paints.

As we have mentioned, a particularly useful application is as an automotive undercoating. In view of the commercial importance of this use, we list some requirements currently in demand in the automobile industry.

The resin system should

(1) be solventless;
(2) be readily sprayable, at room temperature or at elevated temperatures;
(3) provide a tack-free coating within a few minutes, e.g., dry to touch within 30 minutes;
(4) provide a fully cured coating within 24 hours;
(5) provide a coating with excellent adhesion;
(6) provide a coating with excellent abrasion resistance;

(7) provide a coating with no sag at a minimum of 254 μm dry; and

(8) provide a coating that is stable through the paint oven conditions.

Our coatings meet the above criteria in all essential respects.

Although the auto industry has not so far required any substantial degree of corrosion-resistance in resin systems of this type (such resistance being conventionally supplied by electrocoated primers - "E-coats" -), we have found that our coatings are extremely salt-fog corrosion resistant when applied to bare steel (see Corrosion Tests and Example 20 below). Thus, in certain instances when applying our coatings, it is possible to dispense with the conventional E-coat primer.

Our coatings thus combine resistance to abrasion, heat, and salt-fog corrosion.

The following examples illustrate without limiting the invention.

Example 1

In this example Component A was:

| | | | |
|---|---|---|---|
| Polyols : | Glycerol | 3.1 | g |
| | PPT | 33.5 | g |
| | PPG | 150.0 | g |
| Catalysts : | | | |
| | Dibutyl tin dilaurate | 0.281 | g |
| | Triethylenediamine | 0.281 | g |
| | Component B was: | | |
| MDI/Prepolymer | | 94.0 | g |

All polyols and catalysts were mixed together to form Component A. As soon as the two Components A and B were mixed, the reaction occurred instantaneously. The polyurethane was coated on panels and became tack-free within minutes. The dry abrasion result for this material was good (305 μm/542 seconds), and the peel strength was excellent (3.9 kg/cm). The material could not be peeled from the panel.

Example 2

The procedure of Example 1 was followed.

In this example Component A was:

| | | | |
|---|---|---|---|
| Polyols : | Glycerol | 6.2 | g |
| | PPT | 133.0 | g |
| | PPG | 200.0 | g |
| Catalysts : | | | |
| | DABCO | 0.53 | g |
| | DBTDL | 0.53 | g |
| Component B was MDI/Prepolymer | | 188.0 | g |

Properties:

Abrasion, 411 μm/533 seconds

Example 3

The procedure of Example 1 was followed.

In this example, Component A was:

| | | | |
|---|---|---|---|
| Polyols | : | Glycerol | 6.2 g |
| | | PPT | 200.0 g |
| | | PPG | 100.0 g |
| Catalysts | : | | |
| | | DABCO | .49 g |
| | | DBTDL | .49 g |

Component B was:

| | |
|---|---|
| MDI/Prepolymer | 188.0 g |

Properties:

Abrasion, 394 µm /344 seconds

Example 4

Carbon Black Formulation

The composition and process of Example 1 was used except that 0.5 weight percent carbon black based on the total mix was thoroughly mixed into Component A before mixing Component A with Component B. The mixture of Components A and B was sprayed on panels. The mix was found to be readily sprayable in both airless (140 kg/$cm^2$) and air-assisted airless (42-70 kg/$cm^2$) sprayers, at 27° C and 38° C. The film did not sag at thicknesses up to 508 µm and was dry to touch in 30 minutes. The film was black, with low gloss, and the cured panel (like those of the preceding examples) was readily paintable. Cured panels baked at 180° C for 1¼ hours were relatively unaffected.

Variation in Component A/Component B Ratio

The Component A/Component B weight ratio is critical and can be varied only within a narrow range, viz., 1.8 - 2.2/1. Ratios substantially below and above this range result in coatings with poor abrasion resistance. TABLE II shows the effect of A:B (Polyols:MDI/Prepolymer) variation on abrasion resistance.

TABLE II

EFFECT OF POLYOLS:ISOCYANATE PREPOLYMER (A:B) RATIO ON ABRASION PROPERTIES

| Example | Polyols:Isocyanate Prepolymer Wt.Ratio | Abrasion Results (µm/s) | Equivalent s at 381 µm |
|---|---|---|---|
| 5 | 1.5:1 | 612/ 117 | 72.8 |
| 6 | 1.6:1 | 513/ 99 | 73.5 |
| 7 | 1.8:1 | 565/ 358 | 241.9 |
| 8 | 2.1:1 | 682/2114 | 1180.9 |
| 9 | 2.2:1 | 477/1230 | 982.4 |
| 10 | 1.5:1 | 419/ 196 | 178.2 |
| 11 | 1.6:1 | 356/ 169 | 180.9 |
| 12 | 1.8:1 | 477/ 385 | 307.2 |
| 13 | 2.1:1 | 243/ 235 | 367.2 |
| 14 | 2.2:1 | 244/ 246 | 384.4 |
| 15 | 3.0:1 | (tacky) | |
| 16 | 2.5:1 | (tacky) | |

NOTES:

1. Except for the variations stated, all examples followed the formulation and procedure of Example 1. Examples 5-9 contained 0.5% carbon black. In Examples 10-14 the catalyst level was 50% of the amount in Example 1, and the formulatic contained 5% fumed silica.

2. All panels were cured at room temperature for 30 minutes, then at 130 ° C for 10 minutes, then at room temperature for 30 minutes, then at 175 ° C for 20 minutes, then again at room temperature for 30 minutes and finally at 135 ° C for 25 minutes.

3. No blistering was observed of any of the panels.

4. Abrasion tests were made per "Shot-Blaster" procedure described elsewhere herein. Coating thickness and time to fail in test were taken in µm/seconds and also converted to equivalent seconds at 381 µm. To make this conversion, actual seconds were multiplied by 381 and the result divided by actual µm. Endurance of 381 µm-coating for at least 200 seconds is taken as passing the abrasion test. For example, in Example 5 (381 µm x 117)/(612) = 72.8 seconds = failed the test.

More Comparative Runs (not the invention)

In the following runs Component A consisted of only 2 polyols, viz., 6.2 g glycerol plus the stated second polyol; plus 0.1 weight percent DABCO catalyst and 0.1 weight percent DBTDL catalyst, based on the weight of the total mix. Component B was 188 g MDI/Prepolymer in the first four runs and was 91.35 g toluene diisocyanate in the last three. All resulting polyurethane coatings failed in one or more essential respects, as stated. These runs confirm our findings that 3 polyols are required in our Component A, having regard to the other ingredients of the mix.

| Run | Second Polyol | Comments | Abrasion(1) Dry Test (except as stated) |
|---|---|---|---|
| a | Diol, M.W. = 2,000, 800 g | Very sticky | --- --- |
| b | PPG, 400 g | Slow curing | 384/604 dry<br>432/744 wet |
| c | Triol, M.W. = 4,800, 1,280 g | Brittle | 218/175 |
| d | PPT, 266 g | Very hard | 279/134 |
| e | Diol, M.W. = 2,000, 800 g | Very sticky | --- |
| f | PPG, 400 g | Tacky | 338/ 92 |
| g | Triol, M.W. = 4,800, 1,280 g | Brittle | 305/ 19 |

(1) µm/seconds - see "Abrasion Test", below.

In another run ("Run h") the conditions were the same as in Example 1, except that MDI was used instead of MDI/Prepolymer. The coating remained tacky after several days.

Heat Stability

The sample from the formula of Example 1 was tested for heat stability by using the thermal gravimetric analysis method (TGA), at the rate of 2°C/minute. Loss was gradual until about 300°C (50 minutes in the oven), at which point weight loss increased. However, even at 310°C (55 minutes in the oven under the test conditions of 2°C/minutes) weight loss was less than 10% for all samples.

Test data are given in TABLE III.

TABLE III

WEIGHT RETENTION OF COATED STEEL PANELS IN OVEN WITH TEMPERATURES INCREASED AT 2°C/MINUTE

| Oven Temperature °C | Time in Oven Min. | % of Original Weight Retained | | |
|---|---|---|---|---|
| | | Example 17 Cured at 20°C | Example 18 Cured at 100°C | Example 19 Cured at 200°C |
| 210 | 5 | 99.25 | 99.6 | 99.25 |
| 250 | 25 | 98.47 | 99.3 | 98.4 |
| 290 | 45 | 95.6 | 97.2 | 95.6 |
| 310 | 55 | 91.1 | 92.2 | 90.625 |

Component A/Component B ratios in the range 2-2.2/1 give the best heat stability. Ratios below 2/1, e.g., 1.8/1, tend to blister when heated to 200-300°C for 1 hour. (However, as shown in Examples 7 and 12, TABLE II, the 1.8/1 formulations, when cured at 130°C for 10 minutes, then at 175°C for 20 minutes and 135°C for 25 minutes, give excellent films with no blistering. Temperatures higher than 175°C are not commonly encountered in auto bake cycles.)

The heat stability of our 2-2.2/1 coatings is considered unusual, compared to that of similar auto undercoatings, commercial or proposed to be commercial, as shown in TABLE IV. In making these tests, duplicate panels were coated with the indicated materials. Then one of the duplicates was (a) cured at ambient conditions and then tested for abrasion resistance; and the other was (b) baked at 200 °C for 1 hour and then tested for abrasion resistance. The P U coating of this invention was the best of those tested. As a further curious point, our coating was more abrasion resistant after the 200 °C bake than after simple ambient curing; the opposite was true for the other coatings.

TABLE IV

| Abrasion Results | | | |
|---|---|---|---|
| Coating | Thickness (μm) | Abrasion Resistance[(1)] (s) | |
| | | After ambient cure | After 200 °C/60 min.bake |
| PVC[(2)] | 500 | 205 | degraded[(3)] 3 |
| PVC[(2)] | 300 | 95 | degraded[(3)] 3 |
| P U[(4)] | 430 | 60 | 20 |
| P U[(5)] | 300 | 20 | 20 |
| P U[(6)] | 300 | 450 | 615 |

[(1)]Sablux Abrasion Test (see "Abrasion Tests", below);
[(2)]polyvinylchloride samples cured for 15 min. at 100 °C, 20 minutes at 130 °C before test;
[(3)]burned away during test, left with about 130 micron thickness;
[(4)]a 2-component polyurethane product made in Germany;
[(5)]a 2-component polyurethane product made in France;
[(6)]this invention.

SALT-FOG CORROSION TESTING

The test described here is routinely used to determine resistance of coatings to corrosive conditions resulting from road salt, marine environments, and the like.

The Salt-Fog Chamber

The panels were tested in a chamber consisting of a tank for collection and recycle of spray-drip, a rack positioned over the tank to hold the panels in a position slightly inclined from the vertical, and a removable "roof" or cap of transparent plastic, which rested in a trough surrounding the top of the tank and permitted a view of the panels. (A chamber of this type, known as the Singleton SCCH Corrosion Test Cabinet, is available from the Singleton Corp., Cleveland, Ohio.)

A salt water mist or fog was fed constantly into the chamber by means of air bubbling through an upright cylinder containing a 5% aqueous sodium chloride solution.

The interior of the salt-fog chamber was maintained at 38 °C and 100% relative humidity throughout the test.

Panel Preparation

The panels were steel, about 10 cm wide and varying in length from 13 to 35 cm. They were about 1 mm thick. The panels as purchased carried a standard "E" coating. An elongated area of the E coating, about 1.5 cm wide, was removed down the center of the panels, by sandblasting. This left a strip of bare metal down the length of the center. Then about two-thirds of the panel area were coated with the polyurethane formulation of Example 1. The coating (0.25-0.38 mm thick) was allowed to cure as in Example 1; then the panel was placed in the chamber rack.

As noted, the panels tested were steel. However, the test (and our coatings) is applicable to rust-prone ferrous metals generally. The protection is against the formation of rust (iron oxides and hydroxides) on the coated surface.

Test Results (Example 20)

The panels were maintained in the salt-fog chamber for about 2,000 hours. During this period the panels were removed from time to time and examined. The examination included carefully slicing away small sections of the polyurethane layer and examining the panel surface below, especially in the abraded, bare metal area. Where protected by our coating, the surface continued bright and shining throughout the entire test period. The abraded area without the protection of our coating showed gross corrosion, including conversion to red and black iron oxides. All panels showed surface iron oxide discoloration seeping down from the top edges of the panels, which edges were totally exposed, with no coating protection. None of this discoloration penetrated our coating, thus further demonstrating the protective character of our material.

The test period of 2,000 hours is required by certain auto makers as a primer for auto underbody coatings, and is the most stringent such test known to us. Our coatings meet this requirement easily.

An abbreviated salt-fog test may be used in association with an abrasion test, as described under "Abrasion Tests", below.

Some Variables

Workable and preferred amounts of the component ingredients are given in TABLE V. All parts are by weight.

TABLE V

| COMPONENT A | | |
|---|---|---|
| Polyols | Workable (1) | Preferred (About:) |
| Glycerol | 8 to 15 | 10 |
| PPT | 100 to 450 | 120 |
| PPG | 175 to 575 | 535 |
| Catalysts | | |
| DBTDL | Σ 1-10 (2) | 1 |
| DABCO | Σ 1-10 (2) | 1 |
| COMPONENT B | | |
| MDI/Prepolymer | 300 to 400 | 335 |

(1) Workable means that amounts in this range give polyurethane resin coatings with substantially the properties stated in the list of automotive requirements given above.

(2) The above ranges are based on the two catalyst components, each at a weight of 1. However, the two catalyst components can vary, each with respect to the other, within the range of 0.5-5 to 1 (holding all other ingredients constant).

The proportions in TABLE V are subject to the overriding requirement that the Component A/Component B ratio be 1.8 - 2.2/1 and preferably about 2/1. Thus, one cannot simply take the Component

A minima (which add to 289) and divide that sum by the Component B range of 300-400, since at both ends of the 300-400 range the ratio falls well below 1.8/1. Adjustments (increases) would have to be made in Component A to bring the ratio up into the 1.8 - 2.2/1 range. Likewise, the individual maxima given for all 3 polyols in Component A could not be taken, as the A/B ratio at lowest would substantially exceed 2.2. Either the total of A would have to be reduced, or B would have to be increased, or both.

Abrasion Tests

The coatings are tested for abrasion resistance in both the dry and wet state on a Shot Blaster manufactured by Auer, Mannheim, West Germany (Model StrahlanlageST800A). The wet coatings to be tested are soaked in a water bath for 24 hours prior to abrasion testing.

The Shot Blaster abrasion test is the same for both the dry and wet panels. The test consists of shot blasting the urethane polymer coated panel (positioned vertically) with a crushed spherical cast steel shot type GP-14 Wheelabrator-Allevard at an air pressure of 2.4 kg/cm$^2$ at an angle of 60° until full penetration of the coating to expose bare steel is visibly noted. (In the Sablux Test, TABLE IV, conditions are substantially the same except that the panel is positioned horizontally.) For dry or wet sample of 381 µm thickness, a blasting period in excess of 200 seconds is considered commercially acceptable. The actual results are rarely exactly 381 µm or 200 seconds, but are readily extrapolated to these criteria. Thus, in Example 2, where a coating of 411 µm endured to 533 seconds, this is equivalent to (200 x 411)/533 = 155 µm for 200 seconds or (381 x 533)/(411) = 381 µm for 494 seconds.

To simulate different environmental conditions, panels with a cured coating of Example 1 (average thickness of 0.38 mm were conditioned for 24 hours separately at room temperature; at -30°C; at 38° C and 100 relative humidity.

The cured panels were then subjected to a dry gravelometer abrasion test in accord with SAE J-400 with 5 pints of gravel. The thus abraded panels were then placed in a salt fog chamber (a Singleton SCCH Corrosion Test Cabinet, manufactured by the Singleton Corp., Cleveland, Ohio). The Salt Spray (Fog) Test was run in accord with the procedure of ASTM B117-73. The cabinet contained a salt solution of 5 parts by weight NaCl in 95 parts distilled water and was maintained in the exposure zone at a temperature in the range 33.3 - 36.1°C. The exposure time in the cabinet was 24 hours. On examination of the panel for rust spots, none were found.

Standard commercial underbody coating compositions based on mineral filled polyvinylchloride plastisols required a coating thickness of 1.0 mm in order to prevent similar damage of the electrocoat coating leading to the onset of corrosion.

Peel Test (Adhesion)

A strip of brass screen (841 µm), 2.54 cm x 25.4 cm is taped to both ends of electrocoated steel panels (2.54 x 17.7 cm) leaving an excess of screen at one end. The mixes of Components A and B from Examples 1-4 were each applied to a separate panel through the screen to mesh with the panel substrate and then allowed to cure. After curing, the tape was removed from the end with the excess screen allowing it to be peeled at 180° from the panel. The average peeled adhesion measured for these coatings is around 3.9 kg/cm.

By visual analysis, the materials remained bonded to the panel with the excess remaining on the screen.

**Claims**

**1.** A composition consisting essentially of, in parts by weight, 175 to 575 of polyether diol based on propylene oxide and containing only secondary hydroxyl groups, average molecular weight 400 to 4,000; 100 to 450 of polyether triol based on propylene oxide and containing only secondary hydroxyl groups, average molecular weight 500 to 3,000; glycerol 8 to 15; polyurethane catalyst about 1 to 10.

**2.** The composition according to Claim 1 in which the polyether diol is about 535 parts and has an average molecular weight of about 1,000; the polyether triol is about 120 parts and has an average molecular weight of about 1,000; glycerol is about 10 parts; and the polyurethane catalyst consists of dibutyl tin dilaurate, about 1 part, and triethylene diamine, about 1 part.

**3.** The composition according to Claim 1 consisting essentially of two separate components, A and B;

Component A being the composition of Claim 1; and Component B consisting essentially of 300 to 400 parts by weight of an MDI/Polyisocyanate material consisting essentially of 45-50 weight % of diphenylmethane-4,4'-diisocyanate, and balance to make 100% of K-O($CH_2CH[CH_3]O)_m$-K where K is

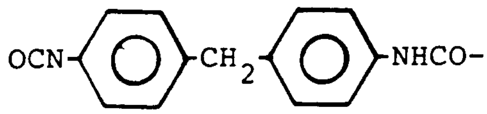

and m is 2-5.

**4.** The composition according to Claim 3 in which the polyether diol is about 535 parts and has a molecular weight of about 1,000; the polyether triol is about 120 parts and has a molecular weight of about 1,000; glycerol is about 10 parts; the polyurethane catalyst consists of dibutyl tin dilaurate about 1 part and triethylene diamine about 1 part; and the MDI/Polyisocyanate material is about 335 parts.

**5.** The composition of Claim 3 containing in addition at least one additive selected from the group consisting of thixotropic agents, anti-oxidants, antiblistering agents, reinforcing agents, thickeners, plasticizers, UV stabilizers, pigments, extenders, pigment dispersants and corrosion inhibitors in amounts ranging from 0.01 to 25% by weight of the total composition.

**6.** The composition according to Claim 5 in which the additive is 0.5 weight percent carbon black.

**7.** A polyurethane resin, said resin being the product obtained by reacting together:
Component A, being the composition of Claim 1; and
Component B, as defined in Claim 3.

**8.** The polyurethane resin according to Claim 7 in which the polyether diol is about 535 parts and has a molecular weight of about 1,000; the polyether triol is about 120 parts and has a molecular weight of about 1,000; glycerol is about 10 parts; the polyurethane catalyst consists of dibutyl tin dilaurate about 1 part, and triethylene diamine about 1 part; and Component B is about 335 parts.

**9.** A process of forming a polyurethane resin comprising intimately mixing together two components, A and B; Component A being the composition of Claim 1; and Component B being as defined in Claim 3.

**10.** The process according to Claim 9 in which, in parts by weight, the polyether diol is about 535 parts and has a molecular weight of about 1,000; the polyether triol is about 120 parts and has a molecular weight of about 1,000; glycerol is about 10 parts; The polyurethane catalyst consists of dibutyl tin dilaurate about 1 part and triethylene diamine about 1 part; and Component B is about 335 parts.

**11.** The process of coating a substrate comprising applying thereto to the resin of Claim 7.

**12.** The process of coating a substrate comprising applying thereto the resin of Claim 8.

**13.** The coated article comprising a substrate and a film coating adhered thereon, said film coating comprising the resin of Claim 7.

**14.** The coated article comprising a substrate and a film coating adhered thereon, said film coating comprising the resin of Claim 8.

**15.** The article according to either Claim 13 or Claim 14 in which the substrate is a member selected from the group consisting of metal, wood, concrete, plastics, rubber, glass, ceramics and fabrics.

**16.** The article according to Claim 15 in which the substrate is an automotive steel frame or body part.

**17.** Article according to Claim 15 in which the Component A/Component B weight ratio is 2-2.2/1; the coated substrate is steel; the coating has a weight loss of less than 10% when the coated substrate is heated from 200 °C to 310 °C at 2 °C/minute; and a 381 µm cured coating endures the Shot Blaster

abrasion test for at least 200 seconds.

**18.** Article according to Claim 17 wherein the coating is cured by baking at 200° C for 1 hour, thereby providing enhanced abrasion resistance as compared to curing at room temperature.

**19.** Process according to either Claim 11 or Claim 12 in which the Component A/Component B weight ratio is 2-2.2/1; and the coated substrate is heated, thereby increasing its abrasion resistance.

**20.** Process according to Claim 19 in which the coated substrate is heated to about 200° C for about 1 hour.

**21.** Method of protecting steel against salt-fog corrosion comprising coating the steel with the polyurethane resin of Claim 7.

**22.** Method of protecting steel against salt-fog corrosion comprising coating the steel with the polyurethane resin of Claim 8.

**Revendications**

**1.** Composition consistant essentiellement en, en parties en poids, 175 à 575 de polyéther diol à base d'oxyde de propylène et ne contenant que des groupes hydroxyles secondaires, poids moléculaire moyen 400 à 4.000 ; 100 à 450 de polyéther triol à base d'oxyde de propylène et ne contenant que des groupes hydroxyles secondaires, poids moléculaire moyen 500 à 3.000 ; glycérol 8 à 15 ; catalyseur de polyuréthane environ 1 à 10.

**2.** Composition selon la revendication 1, où le polyéther diol représente environ 535 parties et a un poids moléculaire moyen d'environ 1.000 ; le polyéther triol représente environ 120 parties et a un poids moléculaire moyen d'environ 1.000 ; le glycérol représente environ 10 parties ; et le catalyseur de polyuréthane se compose de dilaurate de dibutyl étain, environ 1 partie et de triéthylène diamine, environ 1 partie.

**3.** Composition selon la revendication 1, consistant essentiellement en deux composants séparés, A et B ; le Composant A étant la composition de la revendication 1; et le Composant B consistant essentiellement en 300 à 400 parties en poids d'un matériau de MDI/Polyisocyanate consistant essentiellement en 45-50% en poids de diphénylméthane-4,4'-diisocyanate, le reste pour obtenir 100% de $K-O(CH_2CH-[CH_3]O)_m-K$ où K est

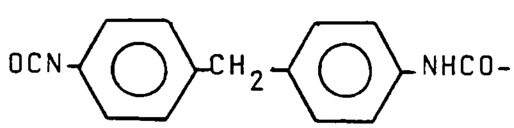

et m est 2-5.

**4.** Composition selon la revendication 3, où le polyéther diol représente environ 535 parties et a un poids moléculaire d'environ 1.000 ; le polyéther triol représente environ 120 parties et a un poids moléculaire d'environ 1.000 ; le glycérol représente environ 10 parties ; le catalyseur de polyuréthane se compose de dilaurate de dibutyl étain d'environ 1 partie et de triéthylène diamine d'environ 1 partie ; et le matériau de MDI/Polyisocyanate représente environ 335 parties.

**5.** Composition de la revendication 3, contenant en addition au moins un additif choisi dans le groupe consistant en agents tixotropes, antioxydants, agents antiboursouflures, agents de renforcement, agents épaississants, plastifiants, stabilisants aux UV, pigments, charges, dispersants des pigments et inhibiteurs de la corrosion en quantités comprises entre 0,01 et 25% en poids de la composition totale.

**6.** Composition selon la revendication 5, où l'additif est 0,5 pour cent en poids de noir de carbone.

7. Résine de polyuréthane, ladite résine étant le produit obtenu par réaction ensemble de :
Composant A, étant la composition de la revendication 1 ; et
Composant B, tel que défini à la revendication 3.

8. Résine de polyuréthane selon la revendication 7, où le polyéther diol représente environ 535 parties et a un poids moléculaire d'environ 1.000 ; le polyéther triol représente environ 120 parties et a un poids moléculaire d'environ 1.000 ; le glycérol représente environ 10 parties ; le catalyseur de polyuréthane se compose de dilaurate de dibutyl étain d'environ 1 partie et de triéthylène diamine d'environ 1 partie ; et le Composant B représente environ 335 parties.

9. Procédé de formation d'une résine de polyuréthane, comprenant le mélange intime de deux composants, A et B ; le Composant A étant la composition de la revendication 1 ; et le Composant B étant tel que défini à la revendication 3.

10. Procédé selon la revendication 9 dans lequel, en parties en poids, le polyéther diol représente environ 535 parties et a un poids moléculaire d'environ 1.000 : le polyéther triol représente environ 120 parties et a un poids moléculaire d'environ 1.000 ; le glycérol représente environ 10 parties ; le catalyseur de polyuréthane se compose de dilaurate de dibutyl étain d'environ 1 partie et triéthylène diamine d'environ 1 partie ; et le Composant B représente environ 335 parties.

11. Procédé de revêtement d'un substrat comprenant l'application à celui-ci de la résine de la revendication 7.

12. Procédé de revêtement d'un substrat comprenant l'application à celui-ci de la résine de la revendication 8.

13. Article revêtu comprenant un substrat et un film de revêtement qui lui adhère, ledit film de revêtement comprenant la résine de la revendication 7.

14. Article enduit comprenant un substrat et un film de revêtement qui lui adhère, ledit film de revêtement comprenant la résine de la revendication 8.

15. Article selon la revendication 13 ou la revendication 14, dans lequel le substrat est un élément choisi dans le groupe consistant en métal, bois, béton, plastique, caoutchouc, verre, céramique et étoffe.

16. Article selon la revendication 15, où le substrat est un châssis en acier d'automobile ou bien une partie de carrosserie.

17. Article selon la revendication 15, où le rapport pondéral Composant A/Composant B est de 2-2,2/1 ; le substrat enduit est en acier ; le revêtement a une perte de poids de moins de 10% lorsque le substrat revêtu est chauffé entre 200 et 310 °C à 2 °C/minute ; et un revêtement durci de 381 µm endure le test d'abrasion au jet de grenaille pendant au moins 200 secondes.

18. Article selon la revendication 17, où le revêtement est durci par cuisson à 200 °C pendant 1 heure, pour ainsi donner une meilleure résistance à l'abrasion en comparaison avec un durcissement à température ambiante.

19. Procédé selon la revendication 11 ou la revendication 12, où le rapport pondéral Composant A/Composant B est de 2-2,2/1 ; et le substrat enduit est chauffé, pour ainsi augmenter sa résistance à l'abrasion.

20. Procédé selon la revendication 19, où le substrat enduit est chauffé à environ 200 °C pendant environ 1 heure.

21. Méthode de protection de l'acier contre la corrosion par un brouillard de sel comprenant le revêtement de l'acier par la résine de polyuréthane de la figure 7.

22. Méthode de protection de l'acier contre la corrosion par un brouillard de sel comprenant le revêtement

de l'acier par la résine de polyuréthane de la revendication 8.

**Patentansprüche**

1. Zusammensetzung, die im wesentlichen aus 175 bis 575 Gewichtsteilen Polyetherdiol, das auf Propylenoxid basiert, nur sekundäre Hydroxylgruppen enthält und ein durchschnittliches Molekulargewicht von 400 bis 4000 aufweist, 100 bis 450 Gewichtsteilen Polyethertriol, das auf Propylenoxid basiert, nur sekundäre Hydroxylgruppen enthält und ein durchschnittliches Molekulargewicht von 500 bis 3000 aufweist, 8 bis 15 Gewichtsteilen Glycerin und etwa 1 bis 10 Gewichtsteilen Polyurethankatalysator besteht.

2. Zusammensetzung nach Anspruch 1, die etwa 535 Teile Polyetherdiol mit einem durchschnittlichen Molekulargewicht von etwa 1000, das etwa 120 Gewichtsteile Polyethertriol mit einem durchschnittlichen Molekulargewicht von etwa 1000, etwa 10 Teile Glycerin enthält und der Polyurethankatalysator aus etwa 1 Teil Dibutylzinndilaurat und etwa 1 Teil Triethylendiamin besteht.

3. Zusammensetzung nach Anspruch 1, die im wesentlichen aus zwei separaten Komponenten A und B besteht, wobei Komponente A die Zusammensetzung gemäß Anspruch 1 ist und Komponente B im wesentlichen aus 300 bis 400 Gewichtsteilen eines MDI/Polyisocyanat-Materials besteht, das im wesentlichen aus 45 bis 50 Gew.-% Diphenylmethan-4,4'-diisocyanat besteht und der Rest zur Auffüllung auf 100 % aus $K-O(CH_2CH[CH_3]O)_m-K$ besteht, wobei K

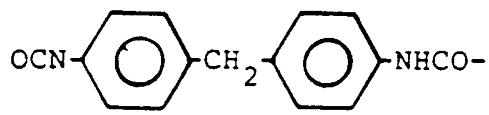

ist und m 2 bis 5 ist.

4. Zusammensetzung nach Anspruch 3, die etwa 535 Teile Polyetherdiol mit einem Molekulargewicht von etwa 1000, etwa 120 Teile Polyethertriol mit einem Molekulargewicht von etwa 1000, etwa 10 Teile Glycerin, wobei der Polyurethankatalysator aus etwa 1 Teil Dibutylzinndilaurat und etwa 1 Teil Triethylendiamin besteht, und etwa 335 MDI/PolyisocyanatMaterial enthält.

5. Zusammensetzung nach Anspruch 3, die zusätzlich mindestens ein Additiv ausgewählt aus der Gruppe bestehend aus thixotropen Mitteln, Antioxidantien, Antiblasenmitteln, Verstärkungsmitteln, Verdickern, Weichmachern, UV-Stabilisatoren, Pigmenten, Verlängerungsmitteln, Pigmentdispergiermitteln und Korrosionsinhibitoren in Mengen im Bereich von 0,01 bis 25 Gew.-%, bezogen auf die gesamte Zusammensetzung, enthält.

6. Zusammensetzung nach Anspruch 5, in der das Additiv aus 0,5 Gew.-% Ruß besteht.

7. Polyurethanharz, das das Produkt ist, das erhalten wird, wenn:
Komponente A, die die Zusammensetzung gemäß Anspruch 1 ist, und
Komponente B, die wie in Anspruch 3 definiert ist, miteinander umgesetzt werden.

8. Polyurethanharz nach Anspruch 7, das etwa 535 Teile Polyetherdiol mit eine Molekulargewicht von etwa 1000, etwa 120 Teile Polyethertriol mit eine Molekulargewicht von etwa 1000, etwa 10 Teile Glycerin, wobei der Polyurethankatalysator aus etwa 1 Teil Dibutylzinndilaurat und etwa 1 Teil Triethylendiamin besteht, und etwa 335 Gewichtsteile Komponente B enthält.

9. Verfahren zur Bildung eines Polyurethanharzes, bei dem zwei Komponenten A und B innig vermischt werden, wobei Komponente A die Zusammensetzung gemäß Anspruch 1 ist und Komponente B wie in Anspruch 3 definiert ist.

10. Verfahren nach Anspruch 9, bei dem etwa 535 Gewichtsteile Polyetherdiol mit einem Molekulargewicht von etwa 1000, etwa 120 Gewichtsteile Polyethertriol mit einem Molekulargewicht von etwa 1000, etwa

10 Gewichtsteile Glycerin, wobei der Polyurethankatalysator aus etwa 1 Gewichtsteil Dibutylzinndilaurat und etwa 1 Gewichtsteil Triethylendiamin besteht, und etwa 335 Gewichtsteile Komponente B vorhanden sind.

**11.** Verfahren zur Beschichtung eines Substrats, bei dem auf dieses das Harz gemäß Anspruch 7 aufgebracht wird.

**12.** Verfahren zur Beschichtung eines Substrats, bei dem auf dieses das Harz gemäß Anspruch 8 aufgebracht wird.

**13.** Beschichteter Gegenstand, der ein Substrat und eine daran haftende Filmbeschichtung umfaßt, wobei die Filmbeschichtung das Harz gemäß Anspruch 7 umfaßt.

**14.** Beschichteter Gegenstand, der ein Substrat und eine daran haftende Filmbeschichtung umfaßt, wobei die Filmbeschichtung das Harz gemäß Anspruch 8 umfaßt.

**15.** Gegenstand nach Anspruch 13 oder Anspruch 14, bei dem das Substrat ausgewählt ist aus der Gruppe bestehend aus Metall, Holz, Beton, Kunststoff, Kautschuk, Glas, Keramik und Geweben.

**16.** Gegenstand nach Anspruch 15, bei dem das Substrat ein Automobilstahlrahmen oder -karosserieteil ist.

**17.** Gegenstand nach Anspruch 15, bei dem das Gewichtsverhältnis von Komponente A/Komponente B 2-2,2/1 beträgt, das beschichtete Substrat Stahl ist, die Beschichtung einen Gewichtsverlust von weniger als 10 % aufweist, wenn das beschichtete Substrat mit 2 °C/Minute von 200 °C auf 310 °C erhitzt wird, und eine gehärtete 381 µm Beschichtung den Sandstrahlabriebtest mindestens 200 Sekunden aushält.

**18.** Gegenstand nach Anspruch 17, bei dem die Beschichtung gehärtet worden ist, indem 1 Stunde lang bei 200 °C gebrannt worden ist, wodurch im Vergleich zur Härtung beim Raumtemperatur verbesserte Abriebfestigkeit geliefert wird.

**19.** Verfahren nach Anspruch 11 oder Anspruch 12, bei dem das Gewichtsverhältnis von Komponente A/Komponente B 2-2,2/1 beträgt und das beschichtete Substrat erhitzt wird, wodurch seine Abriebfestigkeit erhöht wird.

**20.** Verfahren nach Anspruch 19, bei dem das beschichtete Substrat etwa 1 Stunde lang auf etwa 200 °C erhitzt wird.

**21.** Verfahren zum Schutz von Stahl gegen Salz-Nebel-Korrosion, bei dem der Stahl mit dem Polyurethanharz gemäß Anspruch 7 beschichtet wird.

**22.** Verfahren zum Schutz von Stahl gegen Salz-Nebel-Korrosion, bei dem der Stahl mit dem Polyurethanharz gemäß Anspruch 8 beschichtet wird.